# EUROPÄISCHE PATENTSCHRIFT

(11) **EP 3 705 322 B1**
(45) Veröffentlichungstag und Bekanntmachung des Hinweises auf die Patenterteilung: **26.07.2023**
(21) Anmeldenummer: 20160832.0
(22) Anmeldetag: 04.03.2020
(51) Int. Cl.: B60G 17/052

(54) **VERFAHREN ZUR NIVEAUREGULIERUNG EINES LUFTGEFEDERTEN FAHRZEUGS**
METHOD FOR CONTROLLING THE HEIGHT OF A PNEUMATIC VEHICLE
PROCÉDÉ DE RÉGULATION DU NIVEAU D'UN VÉHICULE À SUSPENSION PNEUMATIQUE

(30) Priorität: 07.03.2019 DE 102019105791
(43) Veröffentlichungstag der Anmeldung: 09.09.2020
(73) Patentinhaber: ZF CV Systems Europe BV, 1170 Brussels (BE)
(72) Erfinder: GERLACH, Steffen, 30169 Hannover (DE); WINKEL, Marcel, 30449 Hannover (DE); WITTE, Norbert, 31867 Lauenau (DE)
(74) Vertreter: Ohlendorf, Henrike

(56) Entgegenhaltungen:
- EP-A1- 2 540 536
- EP-A1- 3 072 716
- EP-A2- 0 070 045
- CN-A- 107 813 670
- DE-A1- 3 628 681
- DE-A1- 3 638 849
- DE-A1- 4 222 922
- DE-A1-102013 108 593
- DE-B3-102005 019 479
- DE-B4- 4 317 847
- KR-A- 20080 105 256
- US-A1- 2015 355 646
- US-A1- 2017 246 926

## Beschreibung

Die Erfindung betrifft ein Verfahren zur Niveauregulierung eines luftgefederten Fahrzeugs mit mindestens einer Hauptachse und mindestens einer der Hauptachse vor- oder nachgeordneten Hilfsachse, wobei die Hilfsachsen jeweils anhebbar oder nicht anhebbar ausgebildet sind, mit einer Luftfederanlage, die mindestens einen Luftfederbalg je luftgefederter Haupt- oder Hilfsachse aufweist und die mit einer Druckluftversorgungsanlage zur Versorgung der Luftfederbälge mit Druckluft verbunden ist, mit einer elektronisch geregelten Niveauregulierungseinrichtung, die ein Niveauregelventil zur variablen Einstellung des Niveaus eines Fahrzeugaufbaus des Fahrzeugs durch Belüften, Entlüften oder Absperren mindestens eines der Luftfederbälge der luftgefederten Haupt oder Hilfsachsen aufweist, und mit einer Hilfsachsensteuerung, die ein Hilfsachsventil zum Belüften oder Entlüften sowie optional zum Absperren mindestens eines der mindestens einen Hilfsachse zugeordneten oder zusätzlich angeordneten Luftfederbalgs aufweist, wobei das Niveauregelventil eine erste Schaltstellung zum Belüften mindestens eines der Luftfederbälge mit Druckluft, eine zweite Schaltstellung zum Entlüften mindestens eines der Luftfederbälge an die Atmosphäre sowie eine Schließstellung aufweist, und wobei das Hilfsachsventil mindestens eine erste Schaltstellung zum Herstellen einer pneumatischen Verbindung zwischen der mindestens einen Hilfsachse und der mindestens einen Hauptachse und eine zweite Schaltstellung zum Entlüften mindestens eines der Hilfsachse zugeordneten oder zusätzlich angeordneten Luftfederbalgs an die Atmosphäre aufweist.

Die steigenden Anforderungen an Fahrzeuge hinsichtlich des Komforts und der Fahrdynamik allgemein sowie der stark schwankenden Beladungszustände von Nutzfahrzeugen insbesondere, führen dazu, dass zunehmend Luftfederanlagen in Fahrzeugen zum Einsatz kommen. Luftfederanlagen steigern im Vergleich zu konventionellen Stahlfederungen den Fahrkomfort und verbessern die fahrdynamischen Eigenschaften. Zudem können sie zusätzliche Funktionen bieten. Eine Luftfederanlage umfasst üblicherweise eine Anzahl von an einer gemeinsamen Versorgungsleitung, einer sogenannten Druckluftgalerie, pneumatisch angeschlossenen Luftfederbälgen, die mit zunehmender Belüftung, beziehungsweise Befüllung, den Fahrzeugaufbau anheben und diesen mit abnehmender Befüllung, beziehungsweise Entlüftung, absenken können. Häufig werden Luftfederanlagen in Kombination mit elektronisch geregelten Niveauregulierungseinrichtungen eingesetzt.

Elektronisch geregelte Niveauregulierungseinrichtungen ermöglichen es, das Fahrzeugniveau in bestimmten Situationen gezielt anzuheben oder abzusenken, beispielsweise damit das Fahrzeug mehr Bodenfreiheit bei schwierigem Untergrund hat, die Aerodynamik bei hohen Geschwindigkeiten verbessert wird, der Kraftstoffverbrauch reduziert wird, oder um bei Fahrzeugen mit großer Fahrzeughöhe das Unterfahren einer Brücke mit geringer Durchfahrtshöhe zu ermöglichen. Zusätzlich gibt es Anwendungen, die am stehenden Fahrzeug benötigt werden, beispielsweise zum Abstimmen der Aufbauhöhe an einer Laderampe oder zum Absenken auf Puffer vor dem Anheben einer Kippmulde.

In Nutzfahrzeugen werden Niveauregulierungseinrichtungen verwendet, um bei unterschiedlichem Ladegewicht den Abstand des Fahrzeugaufbaus von den Fahrzeugachsen beziehungsweise von der Fahrbahn auf gleichem Niveau zu halten oder gezielt zu verändern.

Außerdem sind bei luftgefederten Nutzfahrzeugen, Nutzfahrzeuganhängern und/oder Sattelaufliegern mit Niveauregulierungseinrichtungen häufig eine oder mehrere Hilfsachsen des Fahrzeugs anhebbar ausgebildet. Derartige Hilfsachsen können mittels einer automatischen oder manuell bedienbaren Hilfsachsensteuerung bedarfsweise durch Entlüften von Luftfederbälgen und gleichzeitigem Belüften von Liftbälgen dieser Achsen aus einer Fahrstellung vom Boden angehoben werden. Durch die Hilfsachsensteuerung kann das Ladegewicht in einem variablen Lastverhältnis so auf die Fahrzeugachsen verteilt werden, dass die Räder einer Hauptachse vorrangig belastet sind. Dies ist beispielweise bei Sattelzügen sinnvoll, wenn der Sattelauflieger entladen oder nur leicht beladen ist, um den Rollwiderstand und damit den Reifenverschleiß sowie den Kraftstoffverbrauch zu verringern und das Fahrverhalten sowie die Wendigkeit des Fahrzeugs zu verbessern. Andererseits kann die Hilfsachse abgesenkt werden, um bei voll beladenem Anhänger die Hauptachse zu entlasten und damit eine höhere Nutzlast zu ermöglichen.

Die US 2017/0 246 926 A1 zeigt eine Vorrichtung und beschreibt ein Verfahren zum Steuern einer anhebbaren Fahrzeugachse und einer Luftfederung an einem Nutzfahrzeuganhänger mit einer anhebbaren ersten Fahrzeugachse (Hilfsachse) und einer nicht anhebbaren zweiten Fahrzeugachse (Hauptachse), wobei der Betrieb der anhebbaren Fahrzeugachse mit dem Betrieb der Luftfederung koordiniert ist, ohne dass ein Eingreifen eines Bedieners erforderlich ist. Die Vorrichtung umfasst eine Steuerung sowie ein durch die Steuerung ansteuerbares erstes Ventil, welches mit zwei links und rechts des Fahrzeugs angeordneten Liftbälgen zum Anheben oder Absenken der anhebbaren ersten Fahrzeugachse pneumatisch verbunden ist, und ein durch die Steuerung ansteuerbares zweites Ventil, welches mit jeweils zwei links und rechts angeordneten Luftfederbälgen jeder Fahrzeugachse zur Niveauregulierung des Fahrzeugaufbaus pneumatisch verbunden ist, außerdem einen Drucksensor, welcher ein aktuelles Drucksignal der Luftfederung liefert. Um Schäden am Fahrzeug zu vermeiden, wenn der Druck in den Luftfedern der Hauptachse unzureichend niedrig ist, während die Hilfsachse angehoben wurde, wird durch die Steuerung bei Unterschreiten eines vorbestimmten Druckwertes der Luftfederung die Hilfsachse automatisch abgesenkt, um die Hauptachse zu entlasten.

Allerdings ist bei angehobener oder entlasteter Hilfsachse der Druck in den Luftfederbälgen der Hauptachse meistens relativ hoch, so dass die Druckdifferenz zum Vorratsdruck des Druckluftreservoirs der Luftfederanlage relativ klein ist. Wenn das Fahrzeugniveau in dieser Situation bei angehobener oder entlasteter Hilfsachse durch Aufpumpen der Luftfederbälge der Hauptachse weiter angehoben werden soll, steht daher für diesen Vorgang nur ein relativ geringer Volumenstrom zur Verfügung. Daher wird die gewünschte Niveauanpassung relativ viel Zeit in Anspruch nehmen.

Außerdem hat sich herausgestellt, dass das Absenken des Fahrzeugniveaus bei leerem Fahrzeug über das Niveauregelventil ebenfalls relativ langsam erfolgt. Der Grund hierfür ist die geringe Druckdifferenz zwischen Luftfederbalg und Atmosphärendruck. Der Volumenstrom kann zwar durch den Einsatz von Ventilen mit größerem Durchmesser erhöht werden, um eine verbesserte Niveauanpassungsgeschwindigkeit zu erreichen. Dies würde jedoch die Kosten für die erforderlichen Ventilkomponenten erheblich erhöhen. Andererseits beeinträchtigt eine langsame allmähliche Niveauanpassung zum Anheben oder Absenken des Fahrzeugaufbaus nicht nur den Fahrkomfort, sondern kann temporär zu einem für den Fahrer unerwarteten Fahrverhalten des Fahrzeugs führen.

Die DE 43 17 847 B4 offenbart eine Einrichtung zum Steuern einer Schleppachse eines Fahrzeugs. Das Fahrzeug weist dabei mindestens zwei Hinterachsen auf, wobei eine Hinterachse eine Antriebsachse bildet und eine Hinterachse die Schleppachse bildet. An der Antriebsachse und der Schleppachse sind jeweils zwei Luftfederbälge vorgesehen. Eine erste Ventileinrichtung kann die der Antriebsachse zugeordneten Luftfederbälge beaufschlagen. Eine zweite Ventileinrichtung kann die der Schleppachse zugeordneten Luftfederbälge beaufschlagen. Für ein Enlüften von Druckmittelkammern der der Antriebsachse zugeordneten Luftfederbälge und der der Schleppachse zugeordneten Druckfederbälge werden die Druckmittelkammern aller Luftfederbälge über die erste Ventileinrichtung mit der Atmosphäre verbunden.

Die EP 2 540 536 A1 offenbart eine Niveauregelventileinheit für eine Luftfederungsanlage eines Nutzfahrzeugs. Die Niveauregelventileinheit weist Anschlüsse auf, die jeweils mit Luftfederbälgen verbunden sind. Über einen Versorgungsanschluss kann eine Entlüftung sämtlicher Luftfederbälge erfolgen.

Die DE 36 38 849 A1 offenbart eine Luftfedervorrichtung mit mehreren Hinterachsen, wobei mindestens eine Hinterachse als Treibachse und mindestens eine Hinterachse als nicht angetriebene Achse dient. Die Luftfedervorrichtung weist für ein Belüften und Entlüften von der Antriebsachse zugeordneten Luftfedern eine Ventilanordnung mit drei Ventilen auf, von denen zwei gleichartige Ventile die Luftfedern beaufschlagen und ein Ventil diese gleichartigen Ventile mit einer Druckmittelquelle verbindet. Die Luftfedervorrichtung weist weist für ein Belüften und Entlüften von der nicht angetriebenen Achse zugeordneten Luftfedern eine Ventilanordnung mit drei Ventilen auf, von denen ein erstes Ventil der nicht angetriebenen Achse zugeordnete Luftfedern belüftet und ein zweites Ventil die der nicht angetriebenen Achse zugeordneten Luftfedern entlüftet sowie ein drittes Ventil eine Hebeluftfeder mit Strömungsverbindungen zwischen den Ventilen der der Antriebsachse zugeordneten Ventilanordnung verbindet.

Die KR 2008 0105256 A offenbart einen pneumatischen Schaltkreis, der dazu vorgesehen ist, den Druck eines Paars von Luftfederbälgen gleich zu halten. Um eine Verzögerung beim Entlüften der Luftfederbälge zu verkleinern, weist der pneumatische Schaltkreis den Luftfederbälgen zugeordnete Relaisventile auf.

Vor diesem Hintergrund lag der Erfindung die Aufgabe zugrunde, ein Verfahren zur Niveauregulierung eines luftgefederten Fahrzeugs mit einer Hilfsachse vorzustellen, mittels dem eine verbesserte Dynamik bei den jeweiligen Niveauanpassungen erreicht wird, und/oder welches Kosteneinsparungen bei den Ventilkomponenten für die Niveauregulierungseinrichtung und für die Hilfsachsensteuerung ermöglicht.

Die Lösung dieser Aufgabe wird mit einem Verfahren erreicht, welches die Merkmale des Anspruchs 1 aufweist. Eine vorteilhafte Weiterbildung ist in dem abhängigen Anspruch 2 genannt.

Der Erfindung lag die Erkenntnis zugrunde, dass eine Erhöhung der Hubgeschwindigkeit und der Senkgeschwindigkeit an Fahrzeugen, die mit einer elektronischen Niveausteuerung sowie mit einer Hilfsachsensteuerung ausgestattet sind, durch das gleichzeitige Betreiben der für die Niveauregulierung und die Hilfsachsensteuerung vorgesehenen Ventileinrichtungen erreicht werden kann.

Die Erfindung betrifft zur Lösung der verfahrensbezogenen Aufgabe ein Verfahren zur Niveauregulierung eines luftgefederten Fahrzeugs mit mindestens einer Hauptachse und mindestens einer der Hauptachse vor- oder nachgeordneten Hilfsachse, wobei die Hilfsachsen jeweils anhebbar oder nicht anhebbar ausgebildet sind. Dieses Fahrzeug verfügt auch über eine Luftfederanlage, die mindestens einen Luftfederbalg je luftgefederter Haupt- oder Hilfsachse aufweist und die mit einer Druckluftversorgungsanlage zur Versorgung der Luftfederbälge mit Druckluft verbunden ist. Weiter besitzt dieses Fahrzeug eine elektronisch geregelte Niveauregulierungseinrichtung, die ein Niveauregelventil zur variablen Einstellung des Niveaus eines Fahrzeugaufbaus des Fahrzeugs durch Belüften, Entlüften oder Absperren mindestens eines der Luftfederbälge der luftgefederten Haupt oder Hilfsachsen aufweist. Außerdem ist eine Hilfsachsensteuerung vorhanden, welche ein Hilfsachsventil zum Belüften oder Entlüften sowie optional zum Absperren mindestens eines der mindestens einen Hilfsachse zugeordneten oder zusätzlich angeordneten Luftfederbalgs aufweist. Das Niveauregelventil ist in eine erste Schaltstellung zum Belüften mindestens eines der Luftfederbälge mit Druckluft, in eine zweite Schaltstellung zum Entlüften mindestens eines der Luftfederbälge an die Atmosphäre sowie in einen Schließstellung schaltbar. Außerdem ist das Hilfsachsventil mindestens in eine erste Schaltstellung zum Herstellen einer pneumatischen Verbindung zwischen der mindestens einen Hilfsachse und der mindestens einen Hauptachse und in eine zweite Schaltstellung zum Entlüften mindestens eines der Hilfsachse zugeordneten oder zusätzlich angeordneten Luftfederbalgs an die Atmosphäre schaltbar. Gemäß der Erfindung ist bei diesem Verfahren vorgesehen, dass zum Anheben des Fahrzeugaufbaus zum gleichzeitigen Belüften aller Luftfederbälge das Niveauregelventil in dessen ersten Schaltstellung sowie das Hilfsachsventil in dessen ersten Schaltstellung betrieben werden, und dass zum Absenken des Fahrzeugaufbaus zum gleichzeitigen Entlüften aller Luftfederbälge das Niveauregelventil in dessen zweiten Schaltstellung sowie das Hilfsachsventil in dessen zweiten Schaltstellung betrieben werden.

Unter einer Hauptachse wird hier eine nicht anhebbare, antreibbare oder nicht antreibbare Fahrzeugachse verstanden, die in der Regel eine Hauptachslast trägt und meistens mit einem Radgeschwindigkeitssensor sowie im Falle einer Luftfederung mit einem Balgdrucksensor ausgestattet ist.

Unter einer Hilfsachse wird eine nicht antreibbare Fahrzeugachse verstanden, die als Vorlaufachse oder Nachlaufachse der Hauptachse vor- oder nachgelagert angeordnet ist. Eine Hilfsachse kann entweder als eine anhebbare Fahrzeugachse, die aus einer Fahrstellung von der Fahrbahn anhebbar und absenkbar ist, oder als eine nicht anhebbare Fahrzeugachse ausgebildet sein. Der Druck in den Luftfederbälgen einer Hilfsachse kann separat und im Verhältnis zum Druck in den Luftfederbälgen der Hauptachse veränderlich eingestellt werden.

Außerdem wird hier bei den Hilfsachsen unterschieden zwischen einer einfachen Liftachse mit einer nicht regelbaren, also nur vollständig entlüftbaren und belüftbaren Luftfederung, welche über einen separat angeordneten und/oder speziell ausgebildeten Luftfederbalg, einen sogenannten Liftbalg, angehoben und abgesenkt werden kann, einer anhebbaren Schleppachse, welche eine regelbare, d. h. mit Zwischendrücken einstellbare Luftfederung aufweist und zusätzlich über einen Liftbalg angehoben und abgesenkt werden kann, einer nicht anhebbaren Schleppachse, welche mit einer regelbaren Luftfederung ausgestattet ist, sowie einer nicht anhebbaren Schleppachse, welche mit einer nicht regelbaren Luftfederung ausgestattet ist.

Das Niveau eines Fahrzeugaufbaus ist durch den Abstand zwischen dem Fahrzeugaufbau des Fahrzeugs und einer Fahrzeugachse definiert. Ein Niveauregelventil kann aus einem Einzelventil oder aus einer mehrere Einzelventile aufweisenden Ventileinrichtung bestehen. Ein Hilfsachsventil kann ebenso aus einem Einzelventil oder aus einer mehrere Einzelventile aufweisenden Ventileinrichtung bestehen.

Bisher wurde gemäß dem Stand der Technik für den Anhebebetrieb oder Absenkbetrieb bei einem derartig ausgestatteten Fahrzeug nur das Niveauregelventil betätigt. Beim Absenken des Fahrzeugniveaus mit abgesenkten beziehungsweise belüfteten Hilfsachsen mussten somit alle Luftfederbälge über das Niveauregelventil an die Atmosphäre entlüftet werden. Das Hilfsachsventil wurde nicht zum Entlüften benutzt, obwohl dieses über eine Entlüftungsstellung verfügt und an eine Entlüftungsleitung angeschlossen sein kann. Beim Anheben des Fahrzeugniveaus mit hochgestellten beziehungsweise mit gegenüber der Hauptachse entlasteten Hilfsachsen stehen die Luftfederbälge der Hauptachse aufgrund der Beladung in der Regel unter hohem Druck. Infolgedessen ist der Druckunterschied zwischen dem Druckluftvorrat der Druckluftversorgungsanlege des Fahrzeugs sowie dem Luftdruck in den Luftfederbälgen der Hauptachse relativ gering, und daher ist auch der Volumenstrom bei diesem Vorgang vergleichsweise klein. Daraus folgt, dass auch die Hubgeschwindigkeit entsprechend gering ist.

Im Unterschied dazu wird gemäß der Erfindung das Hilfsachsventil zusätzlich zum Niveauregelventil genutzt, um für einen gewünschten Anhebevorgang die Hauptachse zunächst zu entlasten und für einen Absenkvorgang die wirksame Querschnittsfläche der durchströmten pneumatischen Verbindungen beim Entlüften der Luftfederbälge zu erhöhen. Für beide Vorgänge erhöht sich dadurch der jeweilige wirksame Volumenstrom.

Durch die schnellen Druckänderungen der Luftfederbälge an den luftgefederten Fahrzeugachsen beim Druckaufbau und beim Druckabbau mittels des Verfahrens wird eine hohe Dynamik des Luftfederungssystems des Fahrzeugs erreicht. Es hat sich herausgestellt, dass sowohl Anhebevorgänge als auch Absenkvorgänge des Fahrzeugniveaus erheblich beschleunigt werden können. Das Verfahren kann ebenso vorteilhaft in einem Regelkreis zur Regulierung eines Sollniveaus oder zur Einstellung eines neuen Sollniveaus eingesetzt werden, wobei einer oder mehrere der vorhandenen Luftfederbälge bedarfsweise belüftet oder entlüftet beziehungsweise teilbelüftet oder teilentlüftet werden. Beispielsweise können durch einen Algorithmus Ansteuerzeiten für beide Ventile, also für das Niveauregelventil und für das Hilfsachsventil, berechnet werden. Als Folge kann das neue Sollniveau beschleunigt erreicht werden. Durch das Verfahren gemäß der Erfindung wird der Fahrkomfort erhöht und die Betriebssicherheit des Fahrzeugs verbessert.

Das Verfahren ermöglicht alternativ zu der geschilderten Vorgehensweise auch die Verwendung kleinerer, einen geringeren Durchmesser aufweisender und damit kostengünstigerer Ventile mit zumindest der gleichen Anhebe- und Absenkgeschwindigkeit wie bisher.

Das Verfahren gemäß der Erfindung ist grundsätzlich an allen Fahrzeugen und Zugfahrzeug Anhängefahrzeug Kombinationen mit einer Luftfederung und einer elektronischen Niveauregulierung sowie einer Hilfsachsenfunktion anwendbar. Besonders vorteilhaft hat sich der Einsatz der Erfindung an Nutzfahrzeugkombinationen mit mehrachsigen Sattelaufliegern und mindestens einer anhebbaren Hilfsachse gezeigt.

Es ist dabei vorteilhaft, wenn dieses Verfahren automatisiert bei jeder eingeleiteten Niveauanpassung des Fahrzeugs durchgeführt wird. Dadurch ist eine einwandfreie Betriebsbereitschaft der Niveauregulierungseinrichtung gewährleistet. Das Verfahren kann alternativ dazu auch durch einen Bediener manuell aktiviert oder deaktiviert werden. Das Verfahren kann als eine Funktion mittels einer zusätzlichen oder angepassten Softwarekomponente in eine bestehende Niveauregulierungseinrichtung mit einer Hilfsachsensteuerung integriert werden. Zusätzliche Ventilkomponenten sind grundsätzlich nicht erforderlich. Die Voraussetzung für die Durchführbarkeit des Verfahrens ist lediglich, dass das Niveauregulierungsventil und das Hilfsachsventil beziehungsweise die entsprechenden Ventileinrichtungen in einer pneumatischen Struktur eines Luftfedersystems des Fahrzeugs derart angeordnet sind, dass sie in Wirkverbindung geschaltet sind beziehungsweise geschaltet werden können.

Gemäß einer Weiterbildung des Verfahrens kann vorgesehen sein, dass zum Anheben des Fahrzeugaufbaus auf ein vorbestimmtes Niveau folgende Schritte durchgeführt werden:
- Schalten des Niveauregelventils in seine erste Schaltstellung zum Belüften aller mit dem Niveauregelventil verbundenen oder verbindbaren Luftfederbälge,
- gleichzeitiges Schalten des Hilfsachsventils in seine erste Schaltstellung zum Herstellen einer pneumatischen Verbindung zwischen allen anhebbaren Hilfsachsen und der mindestens einen Hauptachse, wobei alle nicht abgesenkten anhebbaren Hilfsachsen abgesenkt werden, und
- Belüften aller Luftfederbälge der, mindestens einen, Hauptachse und aller Hilfsachsen über das Niveauregelventil sowie über das Hilfsachsventil bis ein vorbestimmter Druckwert, bei dem sich das vorbestimmte angehobene Niveau des Fahrzeugaufbaus einstellt, an allen Luftfederbälgen erreicht ist und/oder das Erreichen des Zielniveaus durch ein Höhensignal eines Höhensensors signalisiert wird.

Demnach werden für einen schnellen Anhebevorgang des Fahrzeugniveaus zu Beginn des Hebevorgangs alle Luftfederbälge der Hilfsachsen belüftet, wobei zunächst Hilfsachsen, je nach Ausführungstyp einer Liftfunktion des Fahrzeugs, durch Entlüften oder Belüften von Liftbälgen abgesenkt werden, wenn diese angehoben waren. In der Regel werden die Liftbälge invertiert angesteuert, das heißt, zum Absenken der Hilfsachse werden die Liftbälge entlüftet und die Luftfederbälge belüftet. Grundsätzlich sind jedoch auch Anordnungen denkbar, bei denen die Liftbälge zum Absenken der Hilfsachse belüftet werden.

Die Luftfederbälge der anhebbaren Hilfsachsen werden über das Hilfsachsventil mit den Luftfederbälgen der Hauptachse und über die Hauptachse auch mit den übrigen Hilfsachsen pneumatisch verbunden. Gleichzeitig werden die Luftfederbälge aller Hilfsachsen sowie der Hauptachse über das Niveauregelventil mit dem Druckluftvorrat verbunden. Die Hauptachse und die anhebbaren sowie nicht anhebbaren Hilfsachsen sind somit pneumatisch miteinander verbunden. Das Niveauregelventil und das Hilfsachsventil können dazu so geschaltet sein, dass sie vorteilhaft gleichzeitig und zusammen in der gleichen Strömungsrichtung wirken. Durch das Absenken der betreffenden Hilfsachsen muss bei dem folgenden Hebevorgang das Eigengewicht der zuvor angehobenen Hilfsachsen nicht mit angehoben werden. Durch die nun abgesenkten Hilfsachsen sowie das Belüften aller Luftfederbälge dieser und aller übrigen Hilfsachsen wird der Druck auf die Luftfederbälge der Hauptachse verringert. Infolgedessen vergrößert sich die Druckdifferenz zwischen dem Druckluftvorrat und den Luftfederbälgen der Hauptachse. Aufgrund der größeren Druckdifferenz vergrößert sich bei einem Anhebevorgang der Volumenstrom in die Luftfederbälge. Dadurch wird eine erhebliche Steigerung der Hubgeschwindigkeit im Vergleich zu konventionellen Verfahren erreicht. Das Erreichen des jeweiligen Zielniveaus kann vorteilhaft durch einen in Niveauregulierungseinrichtungen üblicherweise vorhandenen Höhensensor signalisiert und angezeigt werden.

Es ist erfindungsgemäß vorgesehen, dass zum Absenken des Fahrzeugaufbaus auf ein vorbestimmtes Niveau folgende Schritte durchgeführt werden:
- Schalten des Niveauregelventils in seine zweite Schaltstellung zum Entlüften aller mit dem Niveauregelventil verbundenen oder verbindbaren Luftfederbälge an die Atmosphäre,
- gleichzeitiges Schalten des Hilfsachsventils in seine zweite Schaltstellung zum Entlüften aller mit dem Hilfsachsventil verbundenen Luftfederbälge an die Atmosphäre, und
- Entlüften aller Luftfederbälge über das Niveauregelventil sowie über das Hilfsachsventil bis ein vorbestimmter Druckwert, bei dem sich das vorbestimmte abgesenkte Niveau des Fahrzeugaufbaus einstellt, an allen Luftfederbälgen erreicht ist und/oder das Erreichen des Zielniveaus durch ein Höhensignal eines Höhensensors signalisiert wird.

Demnach wird für einen schnellen Absenkvorgang des Fahrzeugniveaus das Niveauregelventil in seine Entlüftungsstellung geschaltet. Gleichzeitig wird das Hilfsachsventil in seine Entlüftungsstellung geschaltet. Infolgedessen wird das Fahrzeugniveau über das Niveauregelventil und über das Hilfsachsventil abgesenkt. Dadurch vergrößert sich der wirksame Durchmesser der pneumatischen Verbindungen zum Druckabbau an die Atmosphäre, wodurch sich der Volumenstrom der abgeführten Druckluft stark erhöht. Die Senkgeschwindigkeit des Fahrzeugniveaus nimmt im Vergleich zu einer Absenkung alleine durch das Niveauregelventil erheblich zu. Beim Absenken des Fahrzeugniveaus können alle anhebbaren Hilfsachsen angehoben werden oder abgesenkt bleiben.

Eine nicht beanspruchte Vorrichtung zur Niveauregulierung ist an einem luftgefederten Fahrzeug vorgesehen, wobei das Fahrzeug mindestens eine Hauptachse und mindestens eine der Hauptachse vor- oder nachgeordnete Hilfsachse aufweist, wobei die Hilfsachsen jeweils anhebbar oder nicht anhebbar ausgebildet sind, mit einer Luftfederanlage, die mindestens einen Luftfederbalg je luftgefederter Haupt- oder Hilfsachse des Fahrzeugs aufweist, und die mit einer Druckluftversorgungsanlage des Fahrzeugs zur Versorgung der Luftfederbälge mit Druckluft verbunden ist, mit einer elektronischen Niveauregulierungseinrichtung, die ein Niveauregelventil zur variablen Einstellung eines Niveaus eines Fahrzeugaufbaus des Fahrzeugs durch Belüften, Entlüften oder Absperren mindestens eines der Luftfederbälge der luftgefederten Haupt- oder Hilfsachsen aufweist, und mit einer Hilfsachsensteuerung, die ein Hilfsachsventil zum Belüften oder Entlüften sowie optional zum Absperren mindestens eines der mindestens einen Hilfsachse zugeordneten oder zusätzlich angeordneten Luftfederbalgs aufweist.

Bei dieser Vorrichtung ist es vorgesehen, dass zum Anheben des Fahrzeugaufbaus zum gleichzeitigen Belüften aller Luftfederbälge sowie zum Absenken des Fahrzeugaufbaus zum gleichzeitigen Entlüften aller Luftfederbälge das Niveauregelventil und das Hilfsachsventil jeweils in Wirkverbindung betrieben werden können.

Dadurch, dass die Luftfederbälge der Haupt- und Hilfsachsen gleichzeitig über zwei Ventile, also über das Niveauregelventil und über das Hilfsachsventil, belüftet beziehungsweise entlüftet werden können, kann bei Anhebe- und Absenkvorgängen des Fahrzeugaufbaus zunächst eine höhere Druckdifferenz zwischen dem Druckluftvorrat und den Luftfederbälgen aufgebaut werden. Weiterhin kann aufgrund des Durchströmens beider Ventile eine größere Querschnittsfläche beim Belüften oder Entlüften der Luftfederbälge wirksam werden. Dadurch wird ein höherer Volumenstrom durch die pneumatische Anordnung der Luftfederanlage ermöglicht. Dies führt zu einer zeitlichen Verkürzung der Anhebe- und Absenkvorgänge.

Das Niveauregelventil weist drei Schaltstellungen auf, wobei in einer ersten Schaltstellung des Niveauregelventils mindestens einer der Luftfederbälge mit einem Drucklufteinlass des Niveauregelventils verbindbar ist, in einer zweiten Schaltstellung des Niveauregelventils mindestens einer der Luftfederbälge mit einem Atmosphärenauslass des Niveauregelventils verbindbar ist, und in einer dritten Schaltstellung die Luftfederbälge sowohl von dem Drucklufteinlass als auch von dem Atmosphärenauslass des Niveauregelventils abgesperrt sind. Durch die drei Schaltstellungen wird eine variable Ansteuerung der Luftfederanlage des Fahrzeugs ermöglicht, wobei die Luftfederbälge der Haupt- und Hilfsachsen belüftet beziehungsweise entlüftet und bestimmte vorgegebene Druckniveaus eingestellt werden können, um den Fahrzeugaufbau bedarfsweise anzuheben, abzusenken und vorgegebene Sollniveaus einzustellen sowie zu halten.

Es kann vorgesehen sein, dass das Hilfsachsventil zwei Schaltstellungen aufweist, wobei in einer ersten Schaltstellung des Hilfsachsventils die mindestens eine Hilfsachse mit der Hauptachse pneumatisch verbindbar ist, und in einer zweiten Schaltstellung des Hilfsachsventils mindestens ein der Hilfsachse zugeordneter oder zusätzlich angeordneter Luftfederbalg mit einem Atmosphärenauslass des Hilfsachsventils verbindbar ist. Mit diesem einfachen Hilfsachsventil mit zwei Schaltstellungen können Luftfederbälge der Hilfsachsen vollständig belüftet und vollständig entlüftet werden.

Es kann vorgesehen sein, dass das Hilfsachsventil zusätzlich eine dritte Schaltstellung aufweist, in der die mindestens eine Hilfsachse von der Hauptachse pneumatisch getrennt ist und der mindestens eine der Hilfsachse zugeordnete oder zusätzlich angeordnete Luftfederbalg von dem Atmosphärenauslass des Hilfsachsventils abgesperrt ist. Eine Schließstellung des Hilfsachsventils erlaubt demnach zusätzlich eine teilweise Belüftung und Entlüftung der Luftfederbälge der Hilfsachsen. Dadurch hat das Hilfsachsventil vorteilhaft eine Druckhaltefunktion.

Grundsätzlich kann das erfindungsgemäße Verfahren, bei dem zusätzlich zu dem Niveauregelventil mit drei Schaltstellungen das Hilfsachsventil mit zwei oder drei Schaltstellungen schaltbar ist, mit allen vier eingangs genannten Hilfsachstypen durchgeführt werden, um schnellere Anhebe- und Absenkvorgänge des Fahrzeugaufbaus zu erreichen. Zur Erinnerung: Diese Hilfsachstypen sind die Liftachse mit Entlüftungs- und Belüftungsstellung, die anhebbare Schleppachse mit Entlüftungs-, Belüftungs- und Druckhaltestellung, die nicht anhebbare Schleppachse mit Entlüftungs- und Belüftungsstellung, sowie die nicht anhebbare Schleppachse mit Entlüftungs-, Belüftungs- und Druckhaltestellung. In all diesen Fällen wird die Druckdifferenz zwischen dem Druckluftvorrat und den Luftfederbälgen im Ergebnis der geschilderten Steuerung erhöht, welches zu einem größeren Volumenstrom im pneumatischen System führt. Bevorzugt und besonders vorteilhaft sind allerdings Ausführungen mit drei möglichen Schaltstellungen des jeweiligen Ventils, da diese nicht nur eine komplette Belüftung und Entlüftung der Tragbälge sondern auch das Halten von Zwischendrücken ermöglicht. In Ausführungsformen mit zwei Schaltstellungen wäre hingegen ein fortwährendes Hin- und Herschalten zwischen Belüften- und Entlüften erforderlich, um annähernd stabile Zwischendrücke einzustellen.

Ein nicht beanspruchtes Fahrzeug, wie Personenkraftwagen oder Nutzfahrzeug, beispielsweise ein Sattelzug, weist mindestens eine Hauptachse und mindestens eine der Hauptachse vor- oder nachgeordneten Hilfsachse auf, wobei die Hilfsachsen jeweils anhebbar oder nicht anhebbar ausgebildet sind, Das Fahrzeug weist weiterhin eine Luftfederanlage auf, die mindestens einen Luftfederbalg je luftgefederter Haupt- oder Hilfsachse aufweist, und die mit einer Druckluftversorgungsanlage zur Versorgung der Luftfederbälge mit Druckluft verbunden ist, mit einer elektronischen Niveauregulierungseinrichtung, die ein Niveauregelventil zur variablen Einstellung eines Niveaus eines Fahrzeugaufbaus des Fahrzeugs durch Belüften, Entlüften oder Absperren mindestens eines der Luftfederbälge der luftgefederten Haupt- oder Hilfsachsen aufweist, und es weist eine Hilfsachsensteuerung auf, die ein Hilfsachsventil zum Belüften oder Entlüften sowie optional zum Absperren mindestens eines der mindestens einen Hilfsachse zugeordneten oder zusätzlich angeordneten Luftfederbalgs aufweist, wobei die Luftfederanlage, die Niveauregulierungseinrichtung und die Hilfsachsensteuerung derart aufgebaut und angeordnet sind, dass sie zur Durchführung eines Verfahrens nach einem der Verfahrensansprüche betreibbar sind.

Die Luftfederanlage, die Niveauregulierungseinrichtung und die Hilfsachsensteuerung des Fahrzeugs können als ein elektronisch regelbares integriertes Luftfedersystem ausgebildet sein.

Die Erfindung wird nachstehend anhand von einem in der beigefügten Zeichnung dargestellten Ausführungsbeispiel näher erläutert. In der Zeichnung zeigt
Fig. 1 einen schematisch vereinfacht dargestellten luftgefederten Sattelauflieger eines Fahrzeugs, an dem ein Verfahren zur Niveauregulierung gemäß der Erfindung durchführbar ist,
Fig. 2a eine Ausgangssituation für eine Niveauanhebung eines Sattelaufliegers gemäß Fig. 1,
Fig. 2b ein Schema zur Niveauanhebung des Sattelaufliegers gemäß Fig. 2a nach dem Stand der Technik,
Fig. 2c ein Schema zur Niveauanhebung des Sattelaufliegers gemäß Fig. 2a hinsichtlich der Erfindung,
Fig. 3a eine Ausgangssituation für eine Niveauabsenkung eines Sattelaufliegers gemäß Fig. 1,
Fig. 3b ein Schema zur Niveauabsenkung des Sattelaufliegers gemäß Fig. 3a nach dem Stand der Technik, und
Fig. 3c ein Schema zur Niveauabsenkung des Sattelaufliegers gemäß Fig. 3a hinsichtlich der Erfindung.

Einige Bauelemente in den Figuren stimmen überein, so dass sie mit denselben Bezugsziffern bezeichnet sind. Zur besseren Abgrenzung zu den Bezugsziffern der Bauteile ist allen Bezugsziffern von pneumatischen Leitungen ein Präfix "P" und allen Bezugsziffern von elektrischen Leitungen ein Präfix "E" vorangestellt.

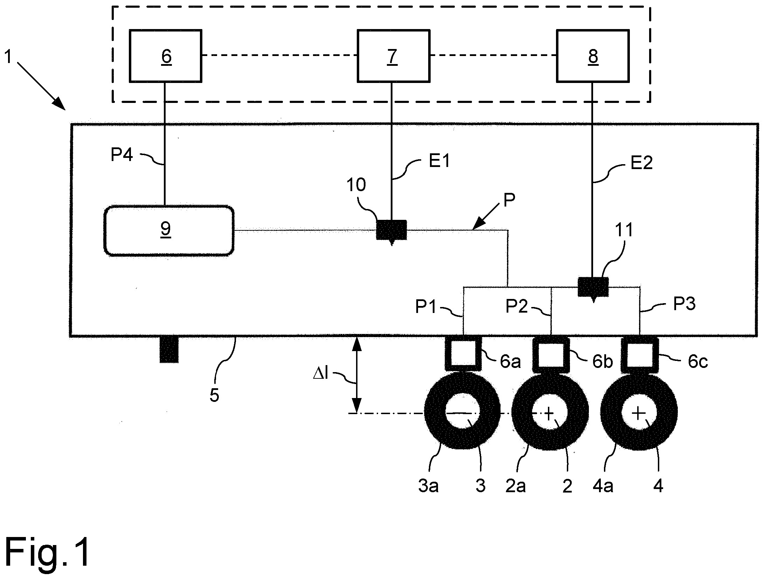

Die Fig. 1 zeigt demnach einen dreiachsigen Sattelauflieger 1 eines Sattelzuges mit einer Hauptachse 2 sowie zwei als Schleppachsen ausgebildeten Hilfsachsen 3, 4, wobei die erste Hilfsachse 3 eine nicht anhebbare Vorlaufachse und die zweite Hilfsachse 4 eine anhebbare Nachlaufachse in Bezug zu der Hauptachse 2 ist. Im Folgenden wird die erste Hilfsachse 3 Vorlaufachse 3 und die zweite Hilfsachse 4 Nachlaufachse 4 genannt. Die Nachlaufachse 4 ist demnach aus einer Fahrstellung mit Bodenkontakt anhebbar beziehungsweise in eine solche Fahrstellung absenkbar ausgebildet. Die als Hauptachse 2 und als Hilfsachsen 3, 4 ausgebildeten Fahrzeugachsen des Sattelaufliegers 1 sind gegenüber einem Fahrzeugaufbau 5 luftgefedert. Dazu weist der Sattelzug eine Luftfederanlage 6 und eine Niveauregulierungseinrichtung 7 sowie eine Hilfsachsensteuerung 8 auf. Die Luftfederanlage 6 und die Niveauregulierungseinrichtung 7 können ein integriertes, elektronisch geregeltes Luftfedersystem bilden, wie beispielsweise das bekannte ECAS System (Electronically Controlled Air Suspension). Diesem Luftfedersystem kann auch die Hilfsachsensteuerung 8 zugeordnet oder in dieses integriert sein.

Die Luftfederanlage 6 weist im vorliegenden Ausführungsbeispiel jeweils zwei als Tragbälge ausgebildete Luftfederbälge für eine federnde Abstützung des Fahrzeugaufbaus 5 gegenüber der Hauptachse 2 und den Hilfsachsen 3, 4 auf. Fig. 1 zeigt lediglich die in Vorwärtsfahrtrichtung gesehen linke Seite des Sattelaufliegers 1, wobei einem linken Fahrzeugrad 3a der Vorlaufachse 3 ein erster Luftfederbalg 6a, einem linken Fahrzeugrad 2a der Hauptachse 2 ein zweiter Luftfederbalg 6b und einem linken Fahrzeugrad 4a der Nachlaufachse 4 ein dritter Luftfederbalg 6c zugeordnet sind. Der rechten Fahrzeugseite sind entsprechend drei weitere, hier nicht dargestellte Luftfederbälge zugeordnet. Die Nachlaufachse 4 kann außerdem einen zusätzlichen Luftfederbalg aufweisen, welcher als ein Liftbalg zur Anhebung beziehungsweise Absenkung der Nachlaufachse 4 dient und ansteuerbar ist. Dieser zusätzliche Luftfederbalg kann beispielsweise achsmittig angeordnet sein, ein solcher ist in Fig. 1 jedoch nicht dargestellt.

Die Luftfederanlage 6 weist außerdem einen Druckluftbehälter 9 einer Druckluftversorgungsanlage des Sattelzuges auf. Der Druckluftbehälter 9 ist eingangsseitig über eine pneumatische Verbindungsleitung P4 mit der Luftfederanlage 6 und ausgangsseitig über eine gemeinsame Druckluftgalerie P mit den Luftfederbälgen 6a, 6b, 6c pneumatisch verbunden. Die Druckluftgalerie P verzweigt sich über jeweils eine pneumatische Verbindungsleitung P1, P2, P3 zu den einzelnen Luftfederbälgen 6a, 6b, 6c. Der vorliegend nicht dargestellte separate Liftbalg der Nachlaufachse 4 verfügt über einen eigenen schaltbaren pneumatischen Anschluss an die Druckluftversorgungsanlage, der eine invertierte Ansteuerung zu den Luftfederbälgen 6a, 6b, 6c erlaubt.

Die Druckluftgalerie P weist ein Niveauregelventil 10 auf, welches zwischen dem Druckluftbehälter 9 und den Verbindungsleitungen P1, P2, P3 angeordnet ist. Das Niveauregelventil 10 ist über eine erste elektrische Leitung E1 mit der Niveauregulierungseinrichtung 7 elektrisch verbunden und von dieser elektrisch ansteuerbar. Das Niveauregelventil 10 weist drei Schaltstellungen N_B, N_E, N_H auf. Die erste Schaltstellung N_B ist eine Belüftungsstellung, in der die Druckluftgalerie P mit Druckluft beaufschlagt wird. Die zweite Schaltstellung N_E ist eine Entlüftungsstellung, in der die Druckluftgalerie P an die Atmosphäre entlüftet wird. Die dritte Schaltstellung N_H ist eine Schließstellung, in der die Druckluftgalerie P vom Druckluftvorrat im Druckluftbehälter 9 und vom Auslass an die Atmosphäre abgesperrt ist, so dass ein jeweiliger aktueller Druckzustand in der Druckluftgalerie P gehalten wird.

Weiterhin ist ein Hilfsachsventil 11 vorgesehen, welches pneumatisch zwischen dem Niveauregelventil 10 und dem Luftfederbalg 6c der Nachlaufachse 4 angeordnet ist. Das Hilfsachsventil 11 ist über eine zweite elektrische Leitung E2 mit der Hilfsachsensteuerung 8 elektrisch verbunden und von dieser elektrisch ansteuerbar. Das Hilfsachsventil 11 weist ebenfalls drei Schaltstellungen L_V, L_E, L_H auf.

Die erste Schaltstellung L_V ist eine Verbindungsstellung, in der die Nachlaufachse 4 beziehungsweise die dieser zugehörigen Luftfederbälge 6c mit der Hauptachse 2 beziehungsweise mit den dieser zugehörigen Luftfederbälgen 6b pneumatisch verbunden ist. Vorliegend ist der Luftfederbalg 6b der Hauptachse 2 zudem mit dem Luftfederbalg 6a der ersten Schleppachse 3 pneumatisch verbunden, so dass die Nachlaufachse 4 in dieser ersten Schaltstellung L_V auch mit der Vorlaufachse 3 beziehungsweise mit deren Luftfederbälgen 6a pneumatisch verbunden ist. Die zweite Schaltstellung L_E des Hilfsachsventils 11 ist eine Entlüftungsstellung, in der die an das Hilfsachsventil 11 angeschlossene pneumatische Verbindungsleitung P3 und die mit dieser verbundenen Luftfederbälge 6c mit der Atmosphäre verbunden sind und entlüftet werden. Die dritte Schaltstellung L_H des Hilfsachsventils 11 ist eine Schließstellung, in der die Nachlaufachse 4 beziehungsweise deren Luftfederbälge 6c pneumatisch abgesperrt sind, so dass der Druckzustand in diesen Luftfederbälgen 6c gehalten wird.

Das Niveau des Sattelaufliegers 1 beziehungsweise des Fahrzeugaufbaus 5 ist vorliegend durch den Abstand ΔI zwischen dem Fahrzeugaufbau 5 und der Hauptachse 2 definiert. Nachfolgend wird ein Verfahren zur Niveauregulierung an dem Sattelauflieger 1 gemäß Fig. 1 beschrieben.

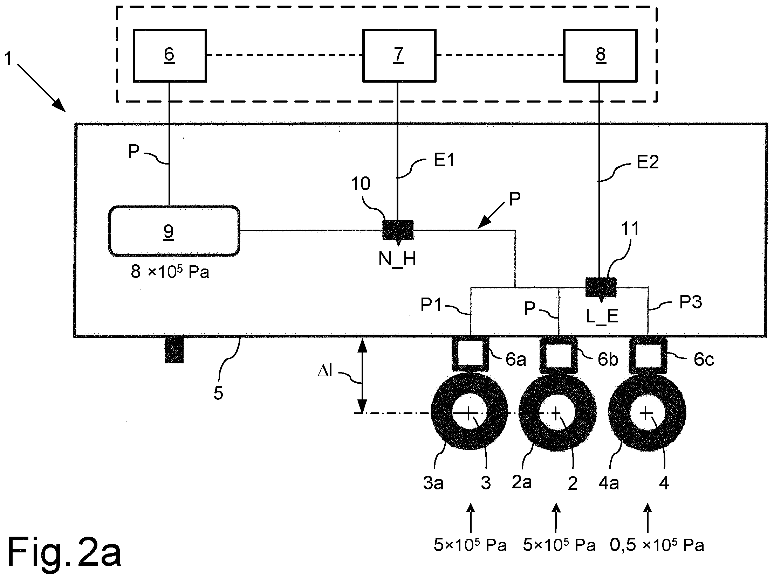

Demnach geht eine Niveauanpassung zur Anhebung des Fahrzeugniveaus ΔI von einer beispielhaft angenommenen Betriebssituation gemäß Fig. 2a aus. Der Sattelauflieger 1 sei hierzu teilbeladen. Die Nachlaufachse 4 ist angehoben und pneumatisch von den übrigen Fahrzeugachsen, also von der Hauptachse 2 und der Vorlaufachse 3, getrennt. Der Druck im Druckluftbehälter 9 beträgt 8×10⁵ Pa. Die Luftfederbälge 6c der Liftachse 4 sind über die zweite Schaltstellung L_E des Liftachsventils 11 entlüftet und weisen lediglich einen Restdruck von 0,5×10⁵ Pa auf. Die Luftfederbälge 6a, 6b der Hauptachse 2 und der Vorlaufachse 3 sind pneumatisch miteinander verbunden und weisen daher den gleichen Druck von 5×10⁵ Pa auf. Das Niveauregelventil 10 befindet sich hierbei in der Schließstellung N_H.

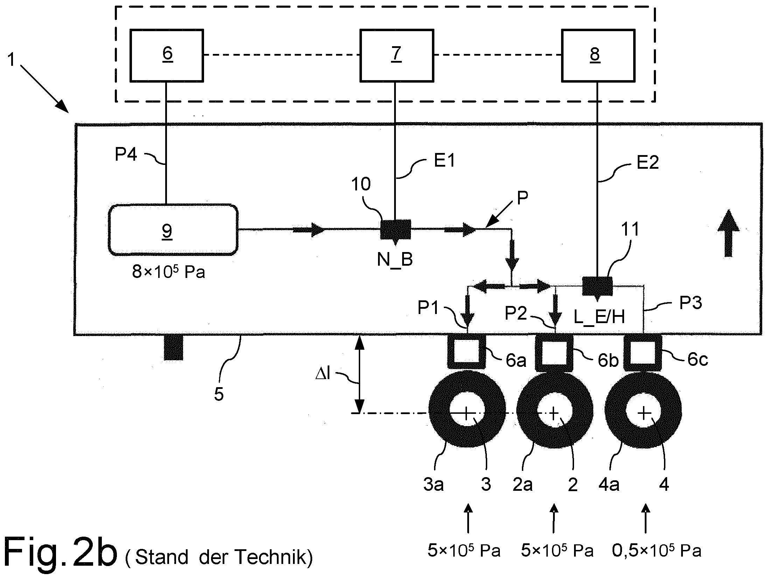

Zum besseren Verständnis eines Hebevorgangs gemäß der Erfindung wird zunächst ein Anhebevorgang gemäß dem Stand der Technik anhand der Fig. 2b beschrieben. Demnach wird das Niveauregelventil 10 in seine erste Schaltstellung N_B zum Belüften der Luftfederbälge 6a, 6b der ersten Schleppachse 3 und der Hauptachse 2 geschaltet. Die Luftfederbälge 6 der Liftachse 4 werden hierbei nicht belüftet. Das Hilfsachsventil 11 befindet sich weiterhin in der zweiten Schaltstellung L_E (Entlüftungsstellung) oder wird in die dritte Schaltstellung L_H (Schließstellung) umgeschaltet. Die Druckdifferenz zwischen dem Druckluftvorrat und dem Druck in den zu belüftenden Luftfederbälgen 6a, 6b beträgt in diesem Beispiel lediglich 8×10⁵ Pa minus 5×10⁵ Pa = 3×10⁵ Pa. Infolgedessen verläuft der Abhebevorgang relativ langsam.

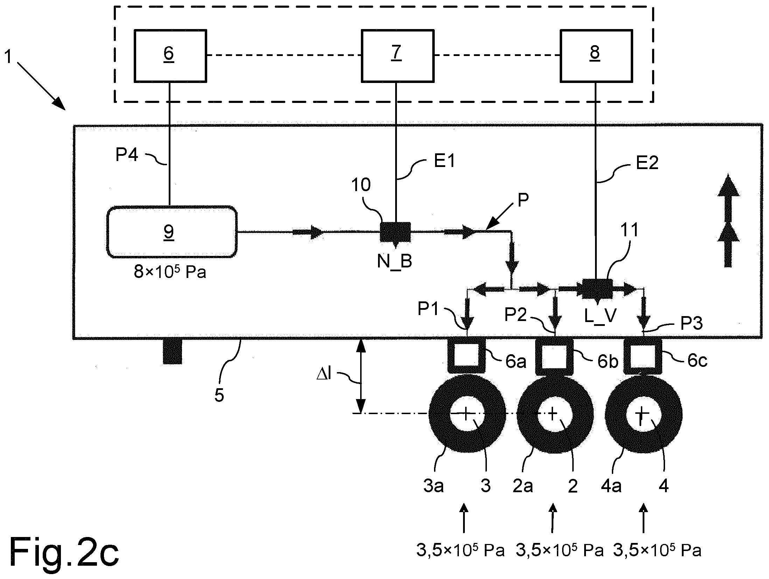

Im Unterschied dazu wird bei dem Verfahren gemäß der Erfindung entsprechend der Fig. 2c das Hilfsachsventil 11 zusätzlich und gleichzeitig mit dem Niveauregelventil 10 in die jeweilige erste Schaltstellung L_V, geschaltet. Das Niveauregelventil 10 befindet sich in dieser Betriebssituation also in seiner Belüftungsstellung N_B und das Hilfsachsventil 11 in seiner Verbindungsstellung L_V, so dass auch die Luftfederbälge 6c der Nachlaufachse 4 belüftet werden. Die Nachlaufachse 4 wird dazu zunächst durch Entlüften des Liftbalgs zum Boden hin abgesenkt. Es sich stellt sich anschließend in den Luftfederbälgen 6a, 6b, 6c aller drei Fahrzeugachsen, nämlich Hauptachse 2, Vorlaufachse 3 und Nachlaufachse 4, ein Druckausgleich mit einem Druck von vorliegend 3,5×10⁵ Pa ein. Insbesondere verringert sich der Druck in den Luftfederbälgen 6a, 6b der Hauptachse 2 und der Vorlaufachse 3, ohne dass das Niveau ΔI merklich absinkt. Die resultierende Druckdifferenz zwischen dem Druckluftvorrat und dem Druck in den zu belüftenden Luftfederbälgen 6a, 6b, 6c beträgt in diesem Beispiel 8×10⁵ Pa minus 3,5×10⁵ Pa = 4,5×10⁵ Pa und ist damit deutlich größer als bei dem zuvor beschriebenen Verfahren gemäß dem Stand der Technik und Fig. 2b. Infolge der größeren Druckdifferenz verläuft der folgende gewünschte Anhebevorgang des Niveaus ΔI des Sattelaufliegers 1 vergleichsweise schnell. Die Summe der Einzeldrücke in den Luftfederbälgen 6a, 6b, 6c bleibt dabei gegenüber dem herkömmlichen Verfahren näherungsweise gleich, wobei Effekte wie beispielsweise eine Achslastverlagerung vom oder zum Zugfahrzeug hier vernachlässigt werden können.

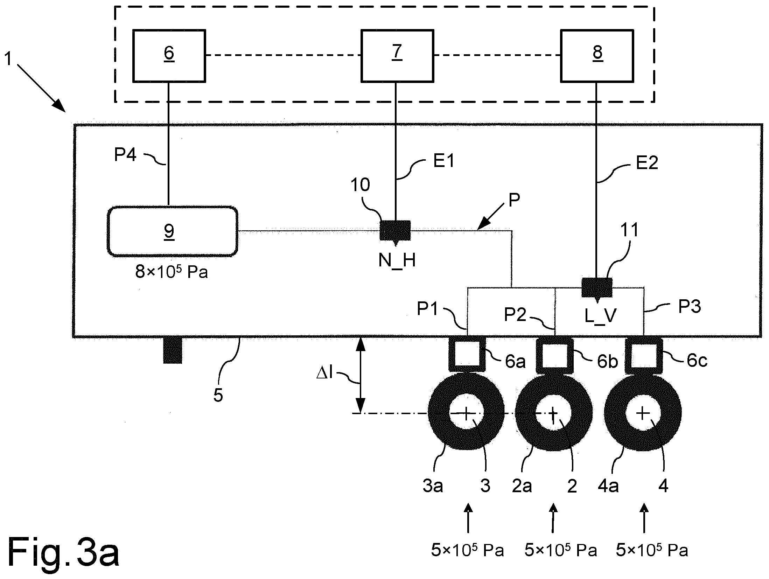

Eine Niveauanpassung zur Absenkung des Fahrzeugniveaus ΔI geht von einer beispielhaft angenommenen Betriebssituation gemäß Fig. 3a aus. Der Sattelauflieger 1 sei nun voll beladen. Die Nachlaufachse 4 ist abgesenkt und deren Luftfederbälge 6c sind pneumatisch mit den Luftfederbälgen 6a, 6b der Hauptachse 2 und der Vorlaufachse 3 verbunden. Der Druck im Druckluftbehälter 9 beträgt 8×10⁵ Pa. Die Luftfederbälge 6c der Nachlaufachse 4 sind über die erste Schaltstellung L_V des Hilfsachsventils 11 aufgrund der dadurch geschalteten pneumatischen Verbindung mit der Hauptachse 2 belüftet. Es herrscht ein Druckausgleich daher zwischen allen Luftfederbälgen 6a, 6b, 6c der Hauptachse 2, der Vorlaufachse 3 und der Nachlaufachse 4. Dieser Druck sei 5×10⁵ Pa. Das Niveauregelventil 10 befindet sich in seiner Schließstellung N_H, so dass dieser Druck gehalten wird.

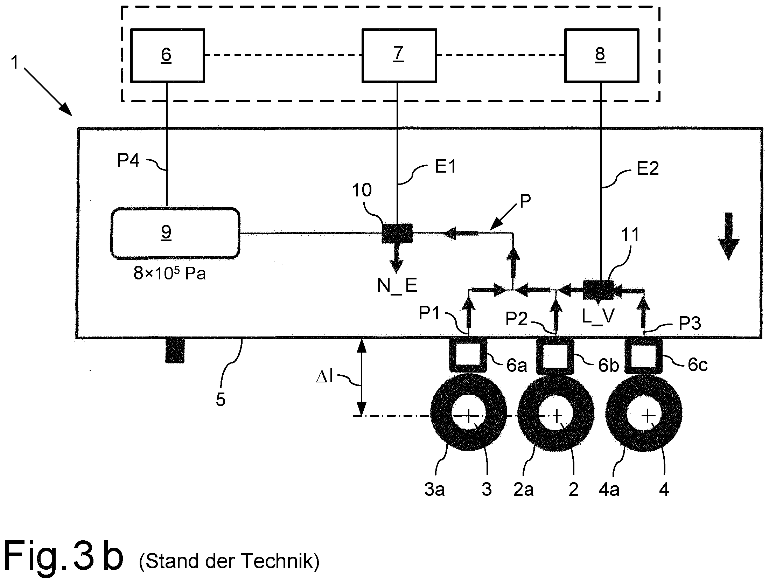

Fig. 3b zeigt zunächst einen Absenkvorgang des Fahrzeugniveaus ΔI gemäß dem Stand der Technik. Dazu wird das Niveauregelventil 10 in seine zweite Schaltstellung N_E zum Entlüften geschaltet. Das Hilfsachsventil 11 verbleibt in seiner ersten Schaltstellung L_V, also in der Verbindungsstellung. Die Entlüftung aller Luftfederbälge 6a, 6b, 6c der Vorlaufachse 3, der Hauptachse 2 und der Nachlaufachse 4 erfolgt ausschließlich über das Niveauregelventil 10. Das Absenken des Sattelaufliegers 1 nimmt dadurch relativ viel Zeit in Anspruch.

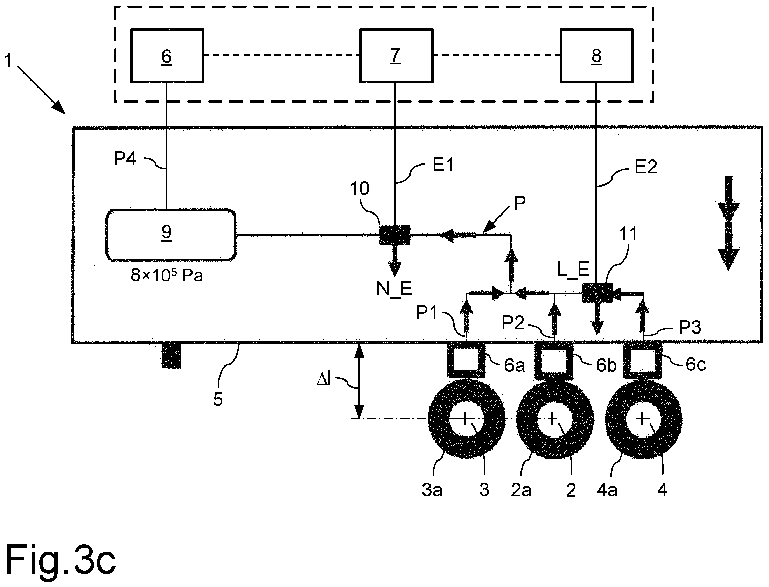

Im Unterschied dazu wird bei dem Verfahren gemäß der Erfindung und dargestellt in Fig. 3c das Hilfsachsventil 11 zusätzlich und gleichzeitig mit dem Niveauregelventil 10 in die jeweilige zweite Schaltstellung N_E, L_E geschaltet. Beide Ventile, das Niveauregelventil 10 und das Hilfsachsventil 11, befinden sich also in ihrer Entlüftungsstellung N_E, L_E und tragen zu einem beschleunigten Druckabbau in der Luftfederbälgen 6a, 6b, 6c bei. Daraus resultiert eine vergleichsweise schnelle Absenkung des Niveaus ΔI des Sattelaufliegers 1.

Schließlich sei darauf hingewiesen, dass das Verfahren auch an anderen als an dem im gezeigten Beispiel beschriebenen Fahrzeug und an anderen pneumatischen Anordnungen durchgeführt werden kann. Wichtig für das Verfahren ist lediglich, dass das Niveauregelventil 10 und das Hilfsachsventil 11 derart geschaltet werden können, dass sie zusammen betrieben werden, um einen schnellen Druckaufbau oder einen schnellen Druckabbau an den vorhandenen Luftfederbälgen 6a, 6b, 6c der Luftfederanlage 6 zu bewirken.

### Bezugszeichenliste (Bestandteil der Beschreibung)

- 1: Fahrzeug, Sattelauflieger
- 2: Fahrzeugachse, Hauptachse
- 2a: Fahrzeugrad der Hauptachse
- 3: Fahrzeugachse, erste Hilfsachse, nicht anhebbare Vorlaufachse
- 3a: Fahrzeugrad der ersten Hilfsachse
- 4: Fahrzeugachse, zweite Hilfsachse, anhebbare Nachlaufachse
- 4a: Fahrzeugrad der zweiten Hilfsachse
- 5: Fahrzeugaufbau
- 6: Luftfederanlage
- 6a: Erster Luftfederbalg, Luftfederbalg der ersten Hilfsachse
- 6b: Zweiter Luftfederbalg, Luftfederbalg der Hauptachse
- 6c: Dritter Luftfederbalg, Luftfederbalg der zweiten Hilfsachse
- 7: Niveauregulierungseinrichtung
- 8: Hilfsachsensteuerung
- 9: Druckluftbehälter
- 10: Niveauregelventil
- 11: Hilfsachsventil
- E1: Erste elektrische Leitung
- E2: Zweite elektrische Leitung
- L_V: Erste Schaltstellung des Hilfsachsventils, Verbindungsstellung
- L_E: Zweite Schaltstellung des Hilfsachsventils, Entlüftungsstellung
- L_H: Dritte Schaltstellung des Hilfsachsventils, Schließstellung
- N_B: Erste Schaltstellung des Niveauregelventils, Belüftungsstellung
- N_E: Zweite Schaltstellung des Niveauregelventils, Entlüftungsstellung
- N_H: Dritte Schaltstellung des Niveauregelventils, Schließstellung
- P: Druckluftgalerie
- P1: Erste pneumatische Verbindungsleitung
- P2: Zweite pneumatische Verbindungsleitung
- P3: Dritte pneumatische Verbindungsleitung
- P4: Vierte pneumatische Verbindungsleitung
- ΔL: Fahrzeugniveau, Niveau

## Patentansprüche

1. Verfahren zur Niveauregulierung eines luftgefederten Fahrzeugs (1)
- mit mindestens einer Hauptachse (2) und mindestens einer der Hauptachse (2) vor- oder nachgeordneten Hilfsachse (3, 4), wobei die Hilfsachse (3, 4) oder die Hilfsachsen (3, 4) jeweils anhebbar oder nicht anhebbar ausgebildet ist oder sind,
- mit einer Luftfederanlage (6), die mindestens einen Luftfederbalg (6a, 6c, 6c) je luftgefederter Haupt- oder Hilfsachse (2, 3, 4) aufweist und die mit einer Druckluftversorgungsanlage zur Versorgung der Luftfederbälge (6a, 6b, 6c) mit Druckluft verbunden ist,
- mit einer elektronisch geregelten Niveauregulierungseinrichtung (7), die ein Niveauregelventil (10) zur variablen Einstellung des Niveaus (ΔI) eines Fahrzeugaufbaus (5) des Fahrzeugs (1) durch Belüften, Entlüften oder Absperren mindestens eines der Luftfederbälge (6a, 6b, 6c) der luftgefederten Haupt oder Hilfsachsen (2, 3, 4) aufweist, und
- mit einer Hilfsachsensteuerung (8), die ein Hilfsachsventil (11) zum Belüften oder Entlüften sowie optional zum Absperren mindestens eines der mindestens einen Hilfsachse (4) zugeordneten oder zusätzlich angeordneten Luftfederbalgs (6c) aufweist,
- wobei das Niveauregelventil (10)
- eine erste Schaltstellung (N_B) zum Belüften mindestens eines der Luftfederbälge (6a, 6b, 6c) mit Druckluft,
- eine zweite Schaltstellung (N_E) zum Entlüften mindestens eines der Luftfederbälge (6a, 6b, 6c) an die Atmosphäre sowie
- eine Schließstellung aufweist, und
- wobei das Hilfsachsventil (11) mindestens
- eine erste Schaltstellung (L_V) zum Herstellen einer pneumatischen Verbindung zwischen der mindestens einen Hilfsachse (4) und der mindestens einen Hauptachse (2) und
- eine zweite Schaltstellung (L_E) zum Entlüften mindestens eines der Hilfsachse (4) zugeordneten oder zusätzlich angeordneten Luftfederbalgs (6c) an die Atmosphäre aufweist,
- wobei zum Anheben des Fahrzeugaufbaus (5) zum gleichzeitigen Belüften aller Luftfederbälge (6a, 6b, 6c) das Niveauregelventil (10) in dessen erster Schaltstellung (N_B) sowie das Hilfsachsventil (11) in dessen erster Schaltstellung (L_V) betrieben werden und
- wobei zum Absenken des Fahrzeugaufbaus (5) zum gleichzeitigen Entlüften aller Luftfederbälge (6a, 6b, 6c) das Niveauregelventil (10) in dessen zweiter Schaltstellung (N_E) sowie das Hilfsachsventil (11) in dessen zweiter Schaltstellung (L_E) betrieben werden,
**dadurch gekennzeichnet, dass** zum Absenken des Fahrzeugaufbaus (5) auf ein vorbestimmtes Niveau (ΔI) folgende Schritte durchgeführt werden:
- Schalten des Niveauregelventils (10) in seine zweite Schaltstellung (N_E) zum Entlüften aller mit dem Niveauregelventil (10) verbundenen oder verbindbaren Luftfederbälge (6a, 6b, 6c) an die Atmosphäre,
- gleichzeitiges Schalten des Hilfsachsventils (11) in seine zweite Schaltstellung (L_E) zum Entlüften aller mit dem Hilfsachsventil (11) verbundenen Luftfederbälge (6c) an die Atmosphäre, und
- Entlüften aller Luftfederbälge (6a, 6b, 6c) über das Niveauregelventil (10) sowie über das Hilfsachsventil (11) bis ein vorbestimmter Druckwert, bei dem sich das vorbestimmte abgesenkte Niveau (ΔI) des Fahrzeugaufbaus (5) einstellt, an allen Luftfederbälgen (6a, 6b, 6c) erreicht ist und/oder das Erreichen des Zielniveaus durch ein Höhensignal eines Höhensensors signalisiert wird.

2. Verfahren nach Anspruch 1, **dadurch gekennzeichnet, dass** zum Anheben des Fahrzeugaufbaus (5) auf ein vorbestimmtes Niveau (ΔI) folgende Schritte durchgeführt werden:
- Schalten des Niveauregelventils (10) in seine erste Schaltstellung (N_B) zum Belüften aller mit dem Niveauregelventil (10) verbundenen oder verbindbaren Luftfederbälge (6a, 6b, 6c),
- gleichzeitiges Schalten des Hilfsachsventils (11) in seine erste Schaltstellung (L_V) zum Herstellen einer pneumatischen Verbindung zwischen allen anhebbaren Hilfsachsen (4) und der mindestens einen Hauptachse (2), wobei alle nicht abgesenkten anhebbaren Hilfsachsen (4) abgesenkt werden, und
- Belüften aller Luftfederbälge (6a, 6b, 6c) der, mindestens einen, Hauptachse (2) und aller Hilfsachsen (3, 4) über das Niveauregelventil (10) sowie über das Hilfsachsventil (11) bis ein vorbestimmter Druckwert, bei dem sich das vorbestimmte angehobene Niveau (ΔI) des Fahrzeugaufbaus (5) einstellt, an allen Luftfederbälgen (6a, 6b, 6c) erreicht ist und/oder das Erreichen des Zielniveaus durch ein Höhensignal eines Höhensensors signalisiert wird.

## Claims

1. Method for controlling the level of an air-suspended vehicle (1), comprising
- at least one main axle (2) and at least one auxiliary axle (3, 4) arranged upstream or downstream of the main axle (2), the auxiliary axle (3, 4) or the auxiliary axles (3, 4) each being designed such that they can be raised or cannot be raised,
- an air suspension system (6) which has at least one air spring bellows (6a, 6c, 6c) per air-suspended main or auxiliary axle (2, 3, 4) and which is connected to a compressed air supply system for supplying the air spring bellows (6a, 6b, 6c) with compressed air,
- an electronically controlled level control device (7) which has a level control valve (10) for variably adjusting the level (ΔI) of a vehicle body (5) of the vehicle (1) by aerating, venting or shutting off at least one of the air spring bellows (6a, 6b, 6c) of the air-suspended main or auxiliary axles (2, 3, 4), and
- an auxiliary axle controller (8) which has an auxiliary valve (11) for aerating or venting, and optionally for closing off at least one air spring bellows (6c) that is associated with the at least one auxiliary axle (4) or additionally arranged,
- the level control valve (10) comprising
- a first switching position (N_B) for aerating at least one of the air spring bellows (6a, 6b, 6c) with compressed air,
- a second switching position (N_E) for venting at least one of the air spring bellows (6a, 6b, 6c) into the atmosphere,
- and a closed position, and
- the auxiliary valve (11) comprising
- at least one first switching position (L_V) for establishing a pneumatic connection between the at least one auxiliary axle (4) and the at least one main axle (2), and
- at least one second switching position (L_E) for venting at least one air spring bellows (6c) that is associated with the auxiliary axle (4) or additionally arranged into the atmosphere,
- the level control valve (10) being operated in the first switching position (N_B) thereof and the auxiliary axle valve (11) being operated in the first switching position (L_V) thereof to simultaneously aerate all the air spring bellows (6a, 6b, 6c) in order to raise the vehicle body (5), and
- the level control valve (10) being operated in the second switching position (N_E) thereof and the auxiliary axle valve (11) being operated in the second switching position (L_E) thereof to simultaneously vent all the air spring bellows (6a, 6b, 6c) in order to lower the vehicle body (5),
**characterized in that,** in order to lower the vehicle body (5) to a predetermined level (ΔI), the following steps are carried out:
- switching the level control valve (10) into the second switching position (N_E) thereof in order to vent all the air spring bellows (6a, 6b, 6c) that are connected or can be connected to the level control valve (10) into the atmosphere,
- and simultaneously switching the auxiliary axle valve (11) into the second switching position (L_E) thereof in order to vent all the air spring bellows (6c) connected to the auxiliary axle valve (11) into the atmosphere, and
- venting all the air spring bellows (6a, 6b, 6c) via the level control valve (10) and via the auxiliary axle valve (11) until a predetermined pressure value, at which the predetermined lowered level (ΔI) of the vehicle body (5) is established, is reached at all the air spring bellows (6a, 6b, 6c) and/or a height signal of a height sensor signals that the target level has been reached.

2. Method according to claim 1, **characterized in that,** in order to raise the vehicle body (5) to a predetermined level (ΔI), the following steps are carried out:
- switching the level control valve (10) into the first switching position (N_B) thereof in order to aerate all the air spring bellows (6a, 6b, 6c) that are connected or can be connected to the level control valve (10),
- simultaneously switching the auxiliary axle valve (11) into the first switching position (L_V) thereof in order to establish a pneumatic connection between all the auxiliary axes (4) that can be raised and the at least one main axle (2), all non-lowered auxiliary axles (4) that can be raised being lowered, and
- aerating all the air spring bellows (6a, 6b, 6c) of the at least one main axle (2) and of all the auxiliary axles (3, 4) via the level control valve (10) and via the auxiliary axle valve (11) until a predetermined pressure value, at which the predetermined raised level (ΔI) of the vehicle body (5) is established, is reached at all the air spring bellows (6a, 6b, 6c) and/or a height signal of a height sensor signals that the target level has been reached.

## Revendications

1. Procédé de régulation du niveau d'un véhicule (1) à suspension pneumatique
- comportant au moins un essieu principal (2) et au moins un essieu auxiliaire (3, 4) agencé avant ou après l'essieu principal (2), l'essieu auxiliaire (3, 4) ou les essieux auxiliaires (3, 4) étant conçu(s) respectivement de manière à pouvoir être soulevé(s) ou non,
- comportant un système de suspension pneumatique (6), qui présente au moins un soufflet de suspension pneumatique (6a, 6c, 6c) par essieu principal ou auxiliaire (2, 3, 4) à suspension pneumatique et qui est relié à une installation d'alimentation en air comprimé pour alimenter les soufflets de suspension pneumatique (6a, 6b, 6c) en air comprimé,
- comportant un dispositif réglé électroniquement de régulation de niveau (7), qui présente une soupape de réglage de niveau (10) destinée à régler de manière variable le niveau (ΔI) d'une caisse de véhicule (5) du véhicule (1) par gonflage, dégonflage ou verrouillage d'au moins l'un des soufflets de suspension pneumatique (6a, 6b, 6c) des essieux principaux ou auxiliaires (2, 3, 4) à suspension pneumatique et
- comportant une commande d'essieu auxiliaire (8), qui présente une soupape d'essieu auxiliaire (11) pour gonfler ou dégonfler ainsi qu'éventuellement pour verrouiller au moins l'un des soufflets de suspension pneumatique (6c) associés à l'au moins un essieu auxiliaire (4) ou agencés de manière supplémentaire,
- la soupape de réglage de niveau (10) présentant
- une première position de commutation (N_B) pour gonfler au moins l'un des soufflets de suspension pneumatique (6a, 6b, 6c) à l'air comprimé,
- une seconde position de commutation (N_E) pour dégonfler au moins l'un des soufflets de suspension pneumatique (6a, 6b, 6c) dans l'atmosphère ainsi qu'une position de fermeture et
- la soupape d'essieu auxiliaire (11) présentant au moins
- une première position de commutation (L_V) pour réaliser une liaison pneumatique entre l'au moins un essieu auxiliaire (4) et l'au moins un essieu principal (2) et
- une seconde position de commutation (L_E) pour dégonfler au moins l'un des soufflets de suspension pneumatique (6c) associés à l'essieu auxiliaire (4) ou agencés en plus, dans l'atmosphère,
- la soupape de réglage de niveau (10) étant exploitée dans sa première position de commutation (N_B) et la soupape d'essieu auxiliaire (11) étant exploitée dans sa première position de commutation (L_V) pour soulever la caisse de véhicule (5) en vue du gonflage simultané de tous les soufflets de suspension pneumatique (6a, 6b, 6c) et
- la soupape de réglage de niveau (10) étant exploitée dans sa seconde position de commutation (N_E) et la soupape d'essieu auxiliaire (11) étant exploitée dans sa seconde position de commutation (L_E) pour abaisser la caisse de véhicule (5) en vue du dégonflage simultané de tous les soufflets de suspension pneumatique (6a, 6b, 6c),
**caractérisé en ce que,** pour abaisser la caisse de véhicule (5) à un niveau prédéfini (ΔI), les étapes suivantes sont effectuées :
- commutation de la soupape de réglage de niveau (10) dans sa seconde position de commutation (N_E) pour dégonfler tous les soufflets de suspension pneumatique (6a, 6b, 6c) reliés ou pouvant être reliés à la soupape de réglage de niveau (10) dans l'atmosphère,
- commutation simultanée de la soupape d'essieu auxiliaire (11) dans sa seconde position de commutation (L_E) pour dégonfler tous les soufflets de suspension pneumatique (6c) reliés à la soupape d'essieu auxiliaire (11) dans l'atmosphère et
- dégonflage de tous les soufflets de suspension pneumatique (6a, 6b, 6c) par l'intermédiaire de la soupape de réglage de niveau (10) ainsi que par l'intermédiaire de la soupape d'essieu auxiliaire (11) jusqu'à ce qu'un niveau de pression prédéfini, auquel le niveau abaissé prédéfini (ΔI) de la caisse de véhicule (5) se règle, soit atteint au niveau de tous les soufflets de suspension pneumatique (6a, 6b, 6c) et/ou jusqu'à ce que le fait que le niveau cible est atteint soit signalé par un signal de hauteur d'un capteur de hauteur.

2. Procédé selon la revendication 1, **caractérisé en ce que,** pour soulever la caisse de véhicule (5) à un niveau prédéfini (ΔI), les étapes suivantes sont effectuées :
- commutation de la soupape de réglage de niveau (10) dans sa première position de commutation (N_B) pour gonfler tous les soufflets de suspension pneumatique (6a, 6b, 6c) reliés ou pouvant être reliés à la soupape de réglage de niveau (10),
- commutation simultanée de la soupape d'essieu auxiliaire (11) dans sa première position de commutation (L_V) pour réaliser une liaison pneumatique entre tous les essieux auxiliaires (4) pouvant être soulevés et l'au moins un essieu principal (2), tous les essieux auxiliaires (4) pouvant être soulevés non abaissés étant abaissés et
- gonflage de tous les soufflets de suspension pneumatique (6a, 6b, 6c) de l'au moins un essieu principal (2) et de tous les essieux auxiliaires (3, 4) par l'intermédiaire de la soupape de réglage de niveau (10) ainsi que par l'intermédiaire de la soupape d'essieu auxiliaire (11) jusqu'à ce qu'un niveau de pression prédéfini, auquel le niveau soulevé prédéfini (ΔI) de la caisse de véhicule (5) se règle, soit atteint au niveau de tous les soufflets de suspension pneumatique (6a, 6b, 6c) et/ou jusqu'à ce que le fait que le niveau cible est atteint soit signalé par un signal de hauteur d'un capteur de hauteur.
